# EUROPEAN PATENT SPECIFICATION

(11) **EP 4 015 235 B1**
(45) Date of publication and mention of the grant of the patent: **11.06.2025**
(21) Application number: 21214284.8
(22) Date of filing: 14.12.2021
(51) Int. Cl.: B60B 17/02, B60B 17/00

(54) **WHEEL OF A VEHICLE FOR INSPECTING A RAILWAY LINE**
RAD EINES FAHRZEUGS ZUR PRÜFUNG EINER EISENBAHNSTRECKE
ROUE D'UN VÉHICULE D'INSPECTION D'UNE LIGNE DE CHEMIN DE FER

(30) Priority: 18.12.2020 IT 202000031526
(43) Date of publication of application: 22.06.2022
(73) Proprietor: RFI S.p.A., 00161 Roma RM (IT)
(72) Inventor: AVIZZANO, Carlo Alberto, 56127 Pisa (IT); FEDELI, Eugenio, 00100 Roma (IT); MIRKO, Ermini, 50066 Firenze (IT); GONNELLI, Mirco, 50019 Sesto Fiorentino (Firenze) (IT); FRISOLI, Antonio, 56127 San Giuliano Terme (Pisa) (IT); LEONARDIS, Daniele, 56123 Pisa (IT); SOLAZZI, Massimiliano, 56021 Cascina (Pisa) (IT); TISENI, Luca, 60025 Porto Recanati (Macerata) (IT)
(74) Representative: Conti, Marco

(56) References cited:
- CN-U- 208 164 648
- CN-U- 211 994 978
- FR-A1- 2 164 462
- IT-A1- UB20 155 152
- JP-U- S55 124 303

## Description

This invention relates to a wheel of a vehicle for inspecting a railway line. The invention also relates to a method for moving a vehicle along a track for inspecting a railway line.

In the railway sector, maintenance operations are required on the railway line at quite regular intervals. These operations may be small maintenance operations or more substantial operations, which require the preparation of a railway construction site.

In both cases, these operations involve the use of machinery, tools, trains and materials of various types which, during the operations, may be positioned on the tracks or close to the latter.

When the maintenance activities are completed, the workers remove the equipment and the materials used in order to re-establish the circulation of trains along the railway line on which operations have been performed.

This activity is of critical importance since the failure to remove equipment and/or materials could constitute an obstacle for the train, which could therefore be damaged or, in the worst case, could be subject to a accident which is dangerous for individuals.

For this reason, before re-activating circulation, it is important to check the absence of obstacles to the circulation of trains.

However, the removal and control performed by the workers is, by its very nature, subject to human error.

In order to examine whether the railway line is clear, in some cases it is envisaged to travel along it with a railway vehicle guided by an authorised operator, who, proceeding at reduced speed, checks that the railway line does not have obstructions. This solution is, however, very slow and is in any case, even if only partly, carried out by human control.

Patent document ES2691145B2 discloses a vehicle designed to travel along the tracks in order to inspect the line; the vehicle moves on the line autonomously, if necessary controlled remotely by an operator. However, this solution does not satisfy the need to inspect the railway line in a precise and efficient manner. Moreover, this solution is not very reliable, since the vehicle is easily subject to problems and faults in its movement along the railway line.

In addition to the above, it should be noted that in the sector of railway vehicles the use of large wheels is known, which roll on the tracks of the high speed railway line. These wheel solutions are subject to very high wear due to the high speed of rotation. Said wheels, in order to resist wear, are made of steel.

However, the production of steel wheels means that the wheels are very heavy and, therefore, the cost of moving the vehicle is greater.

Moreover, the vehicle which implements said wheels cannot be moved (manually) in an easy manner, precisely due to the heavy weight.

Moreover, again in the sector of industrial vehicles, the wheels receive motor torque from a central motor, which, using suitable transmission systems, transmits the torque to the drive wheels.

However, the weight of the transmission is very high and further increases the costs for moving the vehicle. Moreover, on very curved stretches, the speed of rotation of the wheels should be different, to avoid slipping of the wheels.

Thus, the weight of the vehicle affects the ease of installation of the vehicle on the track, as well as the removal from the track and the movement and transport of the vehicle. In effect, a lightweight object is very easy to handle, even just by a pair of railway workers.

Lastly, it should be noted that the prior art vehicles are driven and controlled manually, with the need to provide an operator on board who brakes, stops and restarts the vehicle according to the instructions which are given and the direct observations of the driver. This solution has obvious drawbacks, as it is subject to human error. Not less important, the presence of a driver requires that there is a control cabin, the overall size of which makes the vehicle necessarily not transportable manually.

In the technical sector relative to the wheels of vehicles for inspecting railway networks there are prior art solutions which are, for example, described in the following documents: JPS55124303U, CN208164648U, CN211994978U, FR2164462A1 and ITUB20155152A1. However, these solutions are not very efficient in terms of ratios between wear (thus duration) of the wheel and weight of the wheel, which directly influences the consumption for moving the vehicle.

The aim of the invention is to provide vehicle and a method for inspecting a stretch of railway line which overcome the above-mentioned drawbacks of the prior art.

Said aim is fully achieved by the vehicle and the method according to the invention as characterised in the appended claims.

According to an aspect of the invention, a vehicle is provided for inspecting a railway line in a particularly reliable manner.

The vehicle comprises a supporting structure. The vehicle comprises a cover. The cover is associated with the supporting structure.

The vehicle comprises a plurality of rolling elements (plurality of wheels). The plurality of wheels is connected to the frame. The plurality of rolling elements is configured to come into contact with the tracks of the railway line, so as to allow the vehicle to move on the tracks, along a stretch of the railway line.

The vehicle comprises an inspection system. The inspection system comprises one or more sensors. The inspection system is configured to detect inspection data relative to the stretch of the railway line travelled by the vehicle.

The vehicle comprises an actuating unit. The actuating unit is associated with said plurality of rolling elements for transmitting a drive torque.

The vehicle comprises a control unit. The control unit is connected to the inspection system to receive the inspection data. The control unit is programmed to process the inspection data, for deriving information regarding the presence of obstacles to railway traffic along said stretch of railway line.

According to an embodiment, the control unit is programmed to control the actuating unit in response to the inspection data.

This makes it possible to monitor and control the vehicle autonomously, in such a way as to allow a control of the stretch of railway line which is assigned to the inspection system. In other words, the vehicle is an autonomous driving vehicle.

According to other embodiments, the vehicle is a remote manual driving vehicle, that is to say, the vehicle is driven remotely by an operator who sends driving signals to the control unit by means of a connection to the network.

According to an embodiment, the vehicle comprises an electricity accumulator. According to this embodiment, the actuating unit is powered with electricity. According to an embodiment, the actuating unit comprises a plurality of electric motors. Each electric motor of said plurality is associated with a corresponding rolling element of said plurality of rolling elements.

This embodiment makes it possible to obtain reduced weights and independent control of the individual rolling elements.

According to a further embodiment, the actuating unit comprises a central electric motor (or internal combustion engine), the drive torque of which is transmitted to each rolling element of said plurality by means of a transmission system.

According to an embodiment, the vehicle comprises, for each rolling element of said plurality, a corresponding movement sensor (also referred to below as position sensor). The movement sensor is configured to determine movement data (also defined below as dynamic data), preferably representing an angular position of the corresponding rolling element relative to the supporting structure, an angular speed of the corresponding rolling element and/or an angular acceleration of the corresponding rolling element. The control unit is configured for controlling the actuating unit in response to the movement data (dynamic data).

According to an embodiment, the cover of the frame surrounds, at least partly, one or more of the rolling elements of the plurality of rolling elements. More specifically, according to an embodiment, the cover surrounds all the rolling elements, even though each element is also only partly surrounded. According to other embodiments, the cover surrounds, partly or completely, only some rolling elements of said plurality.

The covering the rolling elements with the cover reduces the turbulence generated by the latter on the air and thus reduces the resistance of the air.

The vehicle extends along a longitudinal axis from a second end to a first end in a direction of forward movement. The cover extends longitudinally between a first longitudinal end and a second longitudinal end. The cover includes a lower wall, facing towards the ground. The cover includes an upper wall, opposite the lower wall.

According to an embodiment, the upper wall is in a advanced position relative to the lower wall along the longitudinal axis towards the first longitudinal end.

This feature makes it possible to increase the aerodynamic performance of the vehicle, reducing the overturning moment of the vehicle, thus obtaining negative lift.

The cover includes a rear wall. The rear wall connects the upper wall to the lower wall. The rear wall is perpendicular to the longitudinal axis. This truncated tail shape reduces the overall dimensions and the total weight of the vehicle.

According to an embodiment, the lower wall is smooth. Preferably, the lower part is made of a heat conductive material to favour the heat exchange of the internal systems, for example, but without limiting the scope of the invention, it might be made of aluminium.

This allows a laminar flow of the air which reduces the resistance of the air as the vehicle moves forward.

According to an embodiment, the supporting structure is a reticular structure. The supporting structure comprises a plurality of tubular elements. The supporting structure comprises a plurality of nodes. Each node is configured for connecting two or more tubular elements.

The reticular structure reduces the weight of the vehicle without adversely affecting the mechanical strength.

According to an embodiment, the supporting structure is a hyperstatic structure. The reticular structure comprises a plurality of articulated couplings.

Each articulated coupling includes a rotary hinge. Each articulated coupling is housed in a corresponding housing of a node and connected to a tubular element of said plurality, for allowing a relative rotation between the node and the tubular element coupled on it.

The articulated couplings allow, during assembly of the supporting structure, a relative rotation between the tubular element and the node. However, during use of the vehicle, the articulated couplings are constrained to the rotation with the tubular element and the node, making the structure hyperstatic.

The articulated couplings allow an easier assembly of the reticular structure which, since it is hyperstatic, could be difficult to assemble.

According to an embodiment, the vehicle comprises a localisation system. The localisation system is configured to determine a geographical position of the vehicle in real time. The localisation system preferably includes a GPS localisation system.

According to an embodiment, each rolling element of said plurality comprises a first portion, made of aluminium, and a second portion, made of plastic material and configured to enter into contact with the track of the railway line, and wherein the supporting structure is made of carbon.

According to an embodiment, the vehicle comprises a differential. The differential is configured for adjusting the rotation of each rolling element of said plurality of rolling elements.

The control unit comprises a communication module. The communication module is configured for sending the inspection data to a remote terminal. The communication module is configured for receiving control data from the remote terminal. The control unit is programmed to control the actuating unit in response to the control data.

The control unit includes a read and write memory. The read and write memory contains reference values for one or more control parameters. The control unit is programmed for controlling the actuation unit on the basis of said reference values.

The control parameters are selected from the following list:
- cruising speed;
- maximum speed;
- distance in kilometres;
- maximum distance in kilometres;
- geographical starting position;
- geographical arrival position;
- interruption of the journey, or not, if there is an object which prevents the vehicle from moving forward;
- number and type of sensors active between said one or more sensors;
- detection distance of said one or more sensors.

According to an embodiment, the control unit is programmed for controlling the actuation unit on the basis of said reference values.

According to an embodiment, the vehicle comprises a localisation system. The localisation system is configured to indicate, preferably but not necessarily in real time, a geographical position of the vehicle.

The control unit is programmed to stop the actuation unit for a geographical position having a distance from the geographical arrival position less than a predetermined distance.

This allows the vehicle to determine autonomously when it has reached the destination.

According to an embodiment, the control unit is programmed to receive distance data representing a distance in kilometres travelled by the vehicle. In other words, the control unit comprises a mileage counter, in such a way as to know in real time the distance travelled. According to an embodiment, the control unit is programmed to stop the actuating unit for distances greater than or equal to a maximum distance value.

In that way, if the vehicle follows a incorrect route, continuing to move away from the geographical destination position, the vehicle would stop (if necessary, with the possibility of reversing the route), on the basis of a predetermined criterion, based, for example, on the route travelled or on the position (measured, for example, by means of a GPS or other localisation system).

According to an embodiment, the vehicle comprises an electricity accumulator. The actuating unit is powered by the electricity accumulator. The control unit is programmed to receive autonomy data, representing an autonomy of the energy accumulator.

According to an embodiment, the control unit is programmed to stop the actuating unit for values of autonomy of the energy accumulator less than or equal to a predetermined autonomy value.

This always allows the geographical starting position to be always returned to, since, preferably, the predetermined autonomy value is equal to the value of electricity necessary to return the vehicle to the geographical starting position. In any case, this control allows, if the vehicle has not reached the destination, to stop the vehicle before the latter stops due to lack of power supply. In short, it allows the battery to be preserved, avoiding the complete discharge.

According to a possible embodiment, the control unit is also programmed to reverse a direction of travel of the vehicle for values of autonomy of the energy accumulator less than or equal to the predetermined autonomy value, to allow a return of the vehicle autonomously.

According to an embodiment, the control unit is programmed for calculating, preferably but not necessarily in real time, a value of a stopping parameter. The stopping parameter is calculated as the ratio between the distance in real time of the vehicle from the geographical destination position and the minimum distance of the vehicle from the geographical destination position.

According to an embodiment, the control unit is programmed to stop the actuating unit for a value of the stopping parameter greater than a predetermined value.

This control makes it possible to identify situations in which the vehicle moves towards the geographical destination position, but not sufficiently to ensure that the control unit recognises an arrival and therefore stops the vehicle. In that case, the vehicle, firstly moves towards the destination, reaching a minimum distance and then starts moving away. For this reason, by evaluating the trend of the control parameter, it is possible to evaluate whether the vehicle is moving away from the geographical destination position.

According to an example embodiment, the control unit is also programmed to control the automatic stopping of the vehicle, in response to (the processing of) inspection data; for example, in response to a detection of objects in front on the plane of travel of the vehicle.

According to an embodiment, said one or more sensors are configured for detecting inspection data for a zone in front of the vehicle. According to an embodiment, said one or more sensors are configured for detecting inspection data for a zone to the side of the vehicle.

According to an embodiment, said one or more sensors include a first Lidar unit, configured for scanning the zone in front of the vehicle. According to an embodiment, said one or more sensors comprise a second Lidar unit, configured for scanning the zone to the side of the vehicle.

According to a particularly advantageous embodiment, the vehicle comprises a third and a fourth Lidar unit. The third Lidar unit is configured for scanning the front zone of the vehicle, in such a way as to make the first Lidar unit redundant. The fourth Lidar unit is configured for scanning the side zone of the vehicle, in such a way as to make the second Lidar unit redundant.

According to this embodiment, the front scanning comprises two measurements which can be compared with each other to confirm the measurement, according to the current regulations in terms of safety in the railway sector. According to this embodiment, the lateral scanning comprises two measurements which can be compared with each other to confirm the measurement, according to the current regulations in terms of safety in the railway sector.

According to an embodiment, the second Lidar unit is positioned on an upper wall of the cover. According to an embodiment, the first Lidar unit is positioned in an advanced position relative to the second Lidar unit, along a direction of forward movement of the vehicle.

According to an embodiment, said one or more sensors include one or more video cameras. According to one of the possible embodiments, said one or more video cameras are in a stereo configuration. Said one or more video cameras are configured for detecting image data, representing images of the stretch of railway line. According to an embodiment, said one or more video cameras are RGB, infrared or thermal video cameras.

According to an embodiment, the control unit is programmed to process the image data in order to identify information regarding the nature of the objects which are encountered. The control unit is programmed to use *object detection* algorithms, for identifying the category of object encountered along the route.

The presence of the video cameras allows the image data to be used to determine the type of objects indicated, in order to provide information not only on the presence or absence of obstacles but also the nature of said obstacles.

According to an embodiment, the video cameras allow a video streaming visible by a user terminal and the video recording for a subsequent analysis.

According to an embodiment, the vehicle comprises at least one illuminator, that is to say, one or more illuminators. Preferably, the illuminator is positioned on the cover. The illuminator faces in the direction of forward movement.

According to an embodiment, the vehicle comprises a flashing light and/or a siren to signal its presence on a stretch of railway line.

According to an embodiment, the control unit is programmed to receive stretch data, identifying the stretch of the railway line. In other words, the stretch data represents the route defined by the stretch of railway line, that is to say, the presence of bends along the stretch of railway line. According to an embodiment, the control unit is programmed to control the actuating unit, on the basis of the stretch data, for adjusting a speed of travel of the vehicle in the presence of bends and/or tunnels.

According to an embodiment, the control unit is programmed to control the actuating unit on the basis of the inspection data.

According to an embodiment, the vehicle comprises a vibration sensor. The vibration sensor is configured for determining vibration data, representing a vibration of the vehicle.

According to an embodiment, the control unit is programmed to reduce a speed of forward movement of the vehicle for values of the vibration of the vehicle greater than a threshold value.

According to an embodiment, the vehicle comprises a sensor (inertial measuring unit), configured for detecting acceleration data, representing forces due to accelerations applied to the vehicle. The control unit is configured to receive the acceleration data and to determine, on the basis of the acceleration data, slipping and/or transversal forces of the vehicle.

According to an aspect of the invention, a system is provided for inspecting a railway line.

The system comprises a vehicle according to any of the features described above. The system comprises a processing unit, located in a stationary position, remote from the vehicle. The processing unit is equipped with a user interface, to allow a user to enter control data. The processing unit is programmed for receiving the inspection data from the vehicle. The processing unit is programmed to send the control data to the vehicle.

According to an aspect of the invention, a method is provided for inspecting a stretch of railway line.

The method comprises a step of preparing a self-propelled vehicle, configured to move on the tracks of the railway line by means of an actuating unit included in the vehicle. The vehicle is equipped with sensors for detecting inspection data indicating any obstacles to the railway traffic.

The method comprises a step of moving the vehicle along the stretch of railway line to be inspected. The method comprises a step of detecting inspection data relating to said stretch of line.

The method comprises a step of processing inspection data.

The method comprises a step of generating information regarding the presence of obstacles to railway traffic along the stretch of railway line inspected.

According to an embodiment, the method comprises a step of processing inspection data, preferably in real time, by a control unit of the vehicle.

The method comprises a step of autonomous driving of the vehicle, wherein the control unit of the vehicle controls the actuating unit in response to the processing of the inspection data.

According to an embodiment, the method comprises a step of setting reference values for one or more control parameters, in the control unit.

The method comprises a step of controlling the actuating unit on the basis of said reference values, by the control unit.

The method comprises a step of controlling the actuating unit, on the basis of the inspection data, of the vibration data and/or acceleration data, for limiting the speed or stopping the vehicle in the presence of front obstacles, high transversal accelerations and inadmissible vibrations.

It should also be noted that, according to an example embodiment, the vehicle is equipped with a signalling device (visual, acoustic or of another type), to indicate an outcome of the inspection; for example, in order to indicate whether anomalies have been identified or, on the other hand, the route has been found to be clear. The warning device is connected to the control unit of the vehicle. There is also a corresponding indication on the user terminal. For example, the indicator may include a luminous indication (red if anomalies have been identified, green if the route is clear) and a corresponding indication on the user terminal. A position along the line may also be associated with each alarm on the terminal.

A further aim of the invention is to provide a wheel and a method for moving a vehicle which overcome at least one of the above-mentioned drawbacks of the prior art.

Said aim is fully achieved by the wheel and the method according to the invention as characterised in the appended claims.

The invention provides a wheel of a vehicle for inspecting a railway line.

The wheel comprises a disc-shaped body. The disc-shaped body extends about an axis of rotation. The disc-shaped body comprises a first face. The disc-shaped body comprises a second face, opposite to the first face. The disc-shaped body comprises a side wall. The side wall is connected to the first and second faces. The side wall is configured to make contact (at least partly) with a track of the rail of the railway line.

The wheel comprises a wear element. The wear element is made of plastic material.

According to an embodiment, the side wall includes a first portion. The wear element is superposed on the first portion. The wear element defines a first contact surface. The first contact surface is designed to make contact with a rolling portion of the track. The rolling portion of the track is substantially parallel to the ground.

The wear element comprises a second portion. The second portion defines a second contact surface. The second contact surface is (substantially) inclined relative to the axis of rotation to make contact with a contact portion of the track. The contact portion of the track rises from the rolling portion and is therefore substantially perpendicular to the ground.

The presence and the positioning of the wear element allow a part of the wheel to be obtained which is more subject to wear, covered with a wear material. In this way, the disc-shaped body may be made of a material which has good mechanical strength characteristics but with reduced resistance to wear. The effect is that of being able to use materials which have a very low specific weight compared with that of steel.

According to an example embodiment, the first contact surface is inclined relative to the axis of the wheel which is variable along a direction parallel to the axis of the wheel. More specifically, the first contact surface has a first zone having a first inclination and a second zone, having a second inclination, greater than the first inclination. The first zone (the one less inclined) is connected to the second contact surface and is actually designed to make contact with the track. For this reason, it is almost substantially parallel to the axis of rotation of the wheel.

According to an embodiment, the second contact surface has a distance from the axis of rotation greater than that of the first contact surface.

According to an embodiment, the side wall comprises a circumferential step. The circumferential step separates the first portion from the second portion of the side wall. According to an embodiment, the height of the step, along a radial direction perpendicular to the axis of rotation, defines a maximum radial thickness of the wear element. In other words, the end distal from the axis of rotation of the step defines a connecting point between the first and second contact surfaces. Preferably, said point of contact does not comprise discontinuities, protuberances, steps. This allows homogeneous wear of the wear element.

According to the invention, the wheel comprises an electric motor.

The electric motor is integrated in the wheel. In other words, the electric motor forms an integral part of the wheel.

The electric motor includes a rotor. The rotor is connected to the disc-shaped body in order to rotate it. The electric motor comprises a stator. The stator can be associated with a frame of the vehicle.

This feature makes it possible to have an autonomous drive force implemented in the wheel, which varies as a function of the power supply of the electric motor. In this way, the speed of rotation of the wheel can be adjusted in real time, avoiding the need for a differential and/or transmissions in the vehicle, with all the obvious advantages in terms of overall dimensions and weight of the vehicle.

According to an embodiment, the wheel comprises a supporting plate. The supporting plate can be associated with the frame of the vehicle. The supporting plate is connected to the stator.

According to an embodiment, the vehicle comprises, for each wheel, a connecting counter-plate. The connecting counter-plate is connected to the connecting plate, for connecting the wheel to the vehicle.

According to an embodiment, the wheel comprises a shaft. The shaft is connected to the disc-shaped body. The shaft is connected to the rotor, for transferring the rotation of the rotor to the disc-shaped body. The shaft is supported by the supporting plate by one or more rolling bearings.

This embodiment makes it possible to obtain a rolling bearing with reduced dimensions, since it is positioned on the shaft which has a limited diameter. This further contributes to the reduction of the total weight of the wheel and, therefore, of the vehicle.

According to an embodiment, the wheel comprises a position transducer. The position transducer is configured to determine an angular position of the wheel relative to the frame of the vehicle.

The position transducer is configured to determine an angular position of the wheel relative to a frame of the vehicle and/or an angular speed of the wheel relative to the frame.

According to an embodiment, the position transducer is interposed, along the axis of rotation of the wheel, between the first face of the disc-shaped body and the supporting plate.

According to an embodiment, the disc-shaped body comprises a connecting hub. The disc-shaped body comprises a plurality of spokes. The disc-shaped body comprises an outer crown, defining the side wall.

According to a preferred embodiment, the disc-shaped body is made of aluminium. According to a preferred embodiment, the wear element is made of polyurethane.

According to an embodiment, the outer diameter of the wheel is included in a range of between 100 mm and 1000 mm, preferably 200 mm and 600 mm, preferably 350 mm and 500 mm.

According to an aspect of the invention, the invention provides a method for moving along a track a vehicle for inspecting a railway line.

The method comprises a step of preparing a plurality of disc-shaped bodies, each extending about an axis of rotation, and including a first face, a second face, opposite the first face, and a side wall, connected to the first and the second face and configured to make contact with the track.

The method comprises a step of connecting disc-shaped bodies to a frame of the vehicle. The method comprises a step of rotating the disc-shaped bodies about the relative axes.

According to an embodiment of the method, the disc-shaped body rolls on a rolling portion of the track, resting on a first contact surface, formed by a wear element superposed on a first portion of the side wall of the respective disc-shaped body.

According to an embodiment of the method, the disc-shaped body comes into contact with a contact portion of the track in a second contact surface, defined by a second portion of the side wall of the respective disc-shaped body.

According to an embodiment, the method comprises a step of preparing a plurality of supporting plates and a corresponding plurality of electric motors, each electric motor having a rotor and a stator.

During said preparing step, each supporting plate is fixed to the frame of the vehicle. Each electric motor is interposed between a corresponding supporting plate and a respective disc-shaped body, with the stator fixed to the supporting plate and the rotor fixed to the disc-shaped body.

These and other features will become more apparent from the following detailed description of a preferred embodiment, illustrated by way of nonlimiting example in the accompanying drawings, in which:

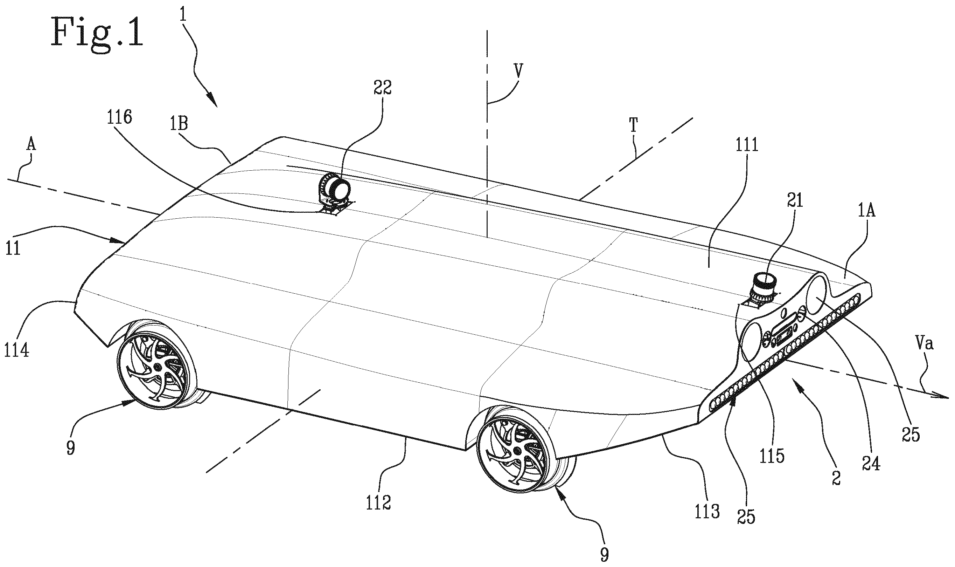

- Figure 1 is a perspective view of a vehicle for inspecting a stretch of railway line;

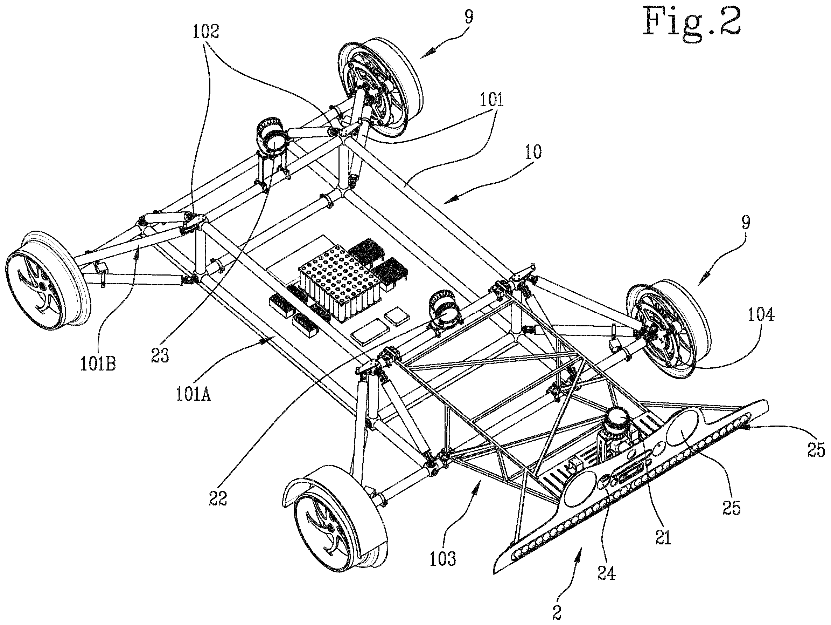

- Figure 2 illustrates a supporting structure of the vehicle of Figure 1;

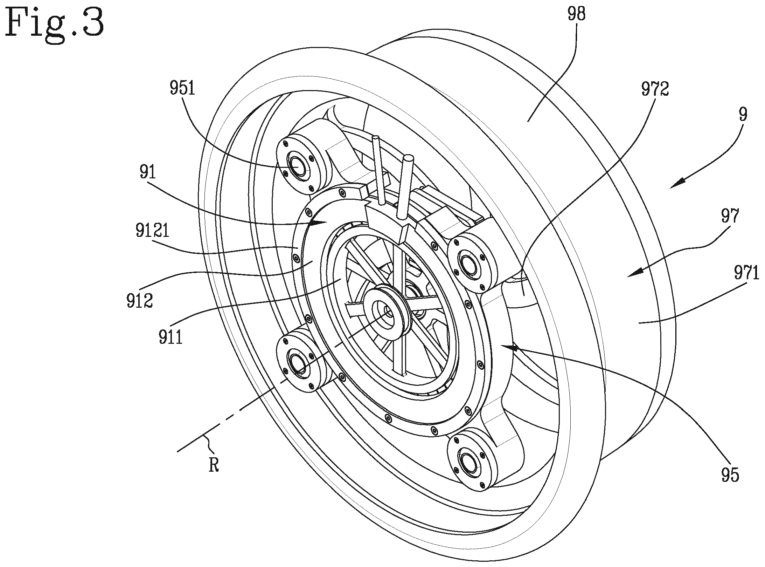

- Figure 3 is a perspective view of a wheel of the vehicle Figure 1;

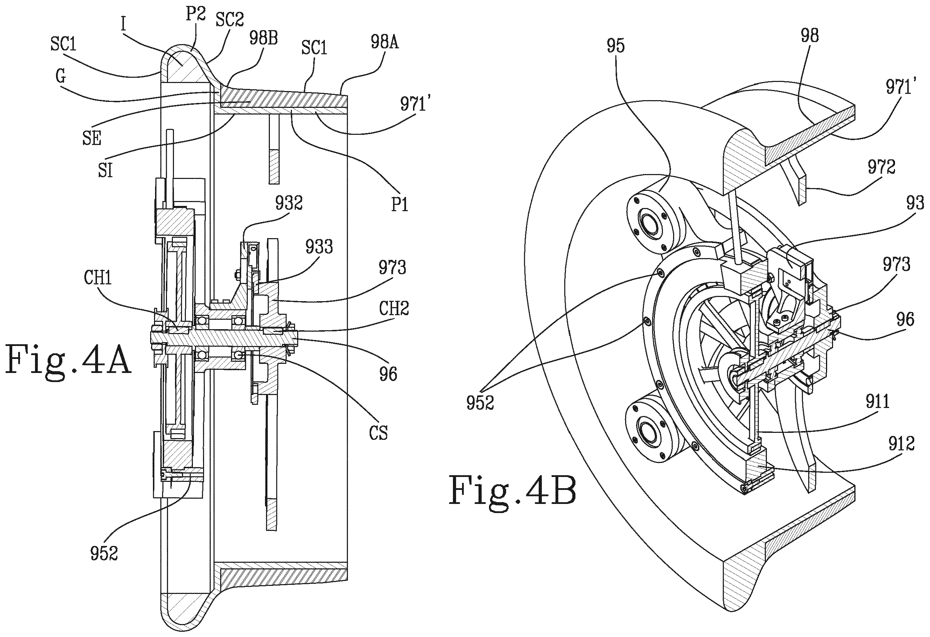

- Figures 4A and 4B illustrate, respectively, a first and a second cross-section of the wheel of Figure 3;

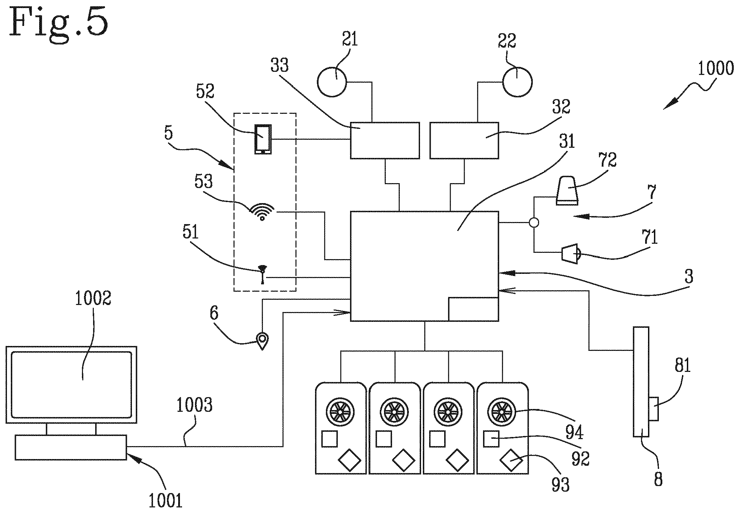

- Figure 5 schematically illustrates a control diagram of the vehicle of Figure 1;

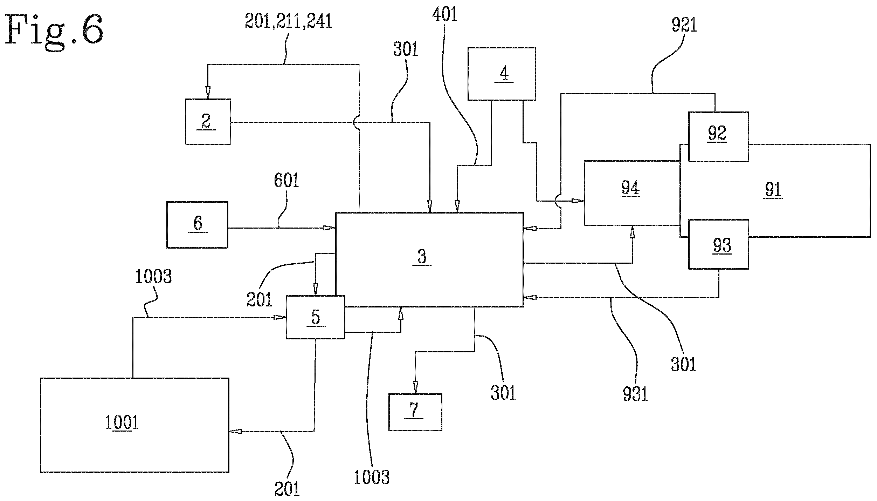

- Figure 6 schematically illustrates a control logic of the vehicle of Figure 1.

With reference to the accompanying drawings, the numeral 1 denotes a vehicle for inspecting a stretch of railway line. The vehicle 1 is configured to advance along a forward direction A in a forward versus VA. The vehicle 1 extends along the direction of forward movement between a first end 1A and a second end 1B. The vehicle 1 also extends along a transversal direction T, perpendicular to the direction of forward movement A. Lastly, the vehicle 1 has a height along the vertical direction V, perpendicular to the transversal direction T and to the direction of forward movement A.

The vehicle 1 comprises a supporting structure 10 which is configured to support the components of the vehicle 1 during its forward movement.

The vehicle 1 comprises a cover 11. The cover 11 surrounds the supporting structure 10. The cover 11 comprises one or more rounded corners. The cover 11 comprises curved profiles, in order to optimise the aerodynamic performance. The cover 11 comprises an upper wall 111 and a lower wall 112. Preferably, the cover 11 comprises a front wall 113 and a rear wall 114.

The cover 11 comprises, on its upper wall 111, a first opening 115. The first opening 115 is configured to allow the escape of a sensor. The cover 11 comprises, on its upper wall 111, a second opening 116. The second opening 116 is configured to allow a sensor to come out. According to an embodiment, the upper wall 111 comprises a first portion and a second portion, positioned, along the vertical direction V, above the first portion. In other words, the upper wall is ridge shaped, in such a way as to have a raised zone, defining the second portion. The first opening 115 and/or the second opening 116 are made on the second portion of the upper wall.

According to an embodiment, the lower wall 111 is smooth.

According to an embodiment, the front wall 113 includes a portion inclined relative to the vertical direction V. Preferably, the front wall 113 also comprises a portion parallel to the vertical direction V, which joins the upper wall 111 to the inclined portion of the front wall 113. It should be noted that, preferably, the upper wall 111 is in the advanced position, along the direction of forward movement A in the feed direction VA, relative to the lower wall 112. This determines a shape of the front wall 113 of the vehicle which converges towards the upper wall 111.

According to other embodiments, the lower wall 112 may be in an advanced position relative to the upper wall 111, along the direction of forward movement A in the feed direction VA.

According to a preferred embodiment, the rear wall 114 is perpendicular to the vertical direction V. In other words, the upper wall 111 and the lower wall 112 interrupt at the same position along the direction of forward movement A (that is, they are vertically aligned V in the rear part). In other words, the rear part of the vehicle 1 is in the form of a truncated tail.

According to an embodiment, the cover 11 comprises two side walls 117, 118.

Each side wall comprises a pair of curved grooves. Each pair of curved grooves is positioned above a corresponding pair of rolling elements of the vehicle 1.

According to an embodiment, the supporting structure 10 comprises a plurality of tubular elements 101. The supporting structure comprises a plurality of nodes 102.

The plurality of tubular elements 101 comprises a first group of tubular elements 101A, which is designed to constitute a base of the vehicle. Said tubular elements of the first group of tubular elements 101A are substantially parallel to a horizontal plane, perpendicular to the vertical direction V.

The plurality of tubular elements 101 comprises a second group of tubular elements 101B, which is designed to form a skeleton extending up from the base of the vehicle 1. Said tubular elements of the second group of tubular elements 101B are perpendicular to the horizontal plane and/or inclined relative to the horizontal plane by an angle less than 90 degrees.

Each tubular element 101 of said plurality is connected to another tubular element 101 of said plurality by means of a respective node 102 of said plurality.

Each node 102 of said plurality comprises one or more of the following features:
- a housing, to receive the tubular element 101 inside, in such a way that the tubular element can rotate relative to its axis of symmetry but is constrained in the other directions and relative to the other rotations; according to other embodiments, the housing is configured for constraining the tubular element 101 also relative to the rotation about its axis of symmetry;
- a hinged articulated coupling, which engages in a housing of the node 102 and which is connected to a corresponding tubular element 101. The hinged articulated coupling allows the tubular element 101 connected to it to also rotate with respect to an axis perpendicular to the axis of symmetry of the tubular element 101. Said rotation enables the step of assembling the supporting structure 10, but, after the assembly, by means of suitable lock pins, the articulated coupling is locked and the tubular element 101 can no longer rotate relative to the node 102.

According to an embodiment, the supporting structure 10 is a hyperstatic structure.

According to an embodiment, the supporting structure 10 comprises a supporting framework 103, configured to support one or more sensors in a front zone of the vehicle 1 (that is, at the first end 1A of the vehicle). According to an embodiment, said supporting framework 103 comprises a plurality of rods connected to each other (in a removable or permanent fashion) to create a reticular structure. According to an embodiment, the cross-section of the plurality of rods 103 is less than the cross-section of the plurality of tubular elements 101.

According to an embodiment, the supporting structure comprises a plurality of coupling plates 104. The coupling plates 104 are connected to a corresponding tubular element 101 of said plurality, at an end of it facing towards the outside of the supporting structure 10. More specifically, the coupling plates face towards the outside of the supporting structure 10. Each coupling plate 104 is configured to be connected to a rolling element of the vehicle 1. Each coupling plate 104 is preferably provided with one or more holes, for connection to the corresponding rolling element by threaded and/or bolted connections.

According to an embodiment, each supporting plate 104 is connected to the respective tubular element 101 by means of a rubberised connection, that is to say, having a predetermined compliance. This allows the supporting plate 104 to transmit to the frame and dampen the stresses it receives from the corresponding rolling element.

Thus, the supporting structure 10 includes a frame; the frame, according to an example embodiment, includes a reticular structure, which may be, for example, formed by the tubular elements 101. The frame defines an internal space; according to the example wherein the frame includes the reticular structure, the inner space has openings in communication with an environment outside the frame.

The cover 11 is connected to the supporting structure 10. According to an example, the cover 11 surrounds (entirely) the frame. According to an example, the cover 11 includes (consists of) a plate; the plate is made of a lightweight material and has a profile designed to reduce a coefficient of friction with the air. Preferably, the cover 11 is connected to the supporting structure 10 in a removable fashion, to facilitate access to the space inside the frame.

According to an example embodiment, each wheel of the vehicle is connected to the supporting structure 10 independently from the other wheels.

The vehicle 1 comprises an inspection system 2. The inspection system 2 is configured for detecting inspection data 201. The inspection data represent the presence or absence of objects along the stretch of railway line.

The vehicle 1 comprises a control unit 3, configured to control the vehicle 1.

The inspection system is configured for sending the inspection data 201 to the control unit 3.

According to an embodiment, the inspection system 2 comprises a first Lidar unit 21. According to an embodiment, the inspection system 2 comprises a second Lidar unit 22.

According to an embodiment, the inspection system 2 comprises a third Lidar unit 23.

The Lidar units operate by measuring the flight time of a light beam which is made to rotate about an axis (optical beam). There are two geometrical types of Lidar unit, the single beam types (one single plane) and the multiple beam types (more planes exiting from the same point). There are also two methods for controlling the beams: with motor-driven mirror and electronic control.

According to an embodiment, the first Lidar unit 21 is configured for performing a scanning of the environment located in front of the vehicle 1, on a first plane, parallel to the horizontal plane.

According to an embodiment, the second and/or the third Lidar unit 22, 23 is configured to perform a scanning of the environment located above the vehicle 1, on a second plane, substantially vertical.

According to an embodiment, the second and/or the third Lidar unit 22, 23 is configured to perform a scanning on a third plane inclined relative to the first and second planes.

According to an embodiment, the first Lidar unit 21 is connected to the supporting framework 103. According to an embodiment, the second and/or the third Lidar unit 22, 23 are connected to a corresponding tubular element 101 of said plurality.

According to an embodiment, said first, second and/or third Lidar unit 21, 22, 23 are configured to detect obstacle data (or presence data) 211, representing the presence of obstacles in the vicinity of the vehicle 1.

More specifically, the Lidar units 21, 22, 23 are configured to send a data vector containing the succession of readings of the sensor with variations in the position of the vehicle 1 and with changes in a beam. For example, the readings available could be:
- Acquisition time in nanoseconds;
- Measurement ID
- Encoder measurement
- Block of data with: distance, reflectivity, number of photons read, noise photons.

According to an embodiment, the inspection system comprises one or more video cameras 24. Said one or more video cameras 24 face towards the moving away direction VA in a direction having at least one component in the direction of forward movement A.

Said one or more video cameras 24 are configured for detecting image data 241, representing an RGB image of the environment encountered by the vehicle 1 in the stretch of railway line.

According to an embodiment, said one or more video cameras 24 are in a stereo configuration, in such a way as to represent a three-dimensional image of the objects encountered in the stretch of railway line.

In particular, in the context of video cameras in a stereo configuration, the filming on the optical planes of one or more objects present in the scene allows vision algorithms to perform an approximate reconstruction of the three-dimensional position of the objects, and to use this reconstruction to determine the position of the objects with regard to the limit shape.

The reconstruction of the three-dimensional geometry is generally performed by using in sequence two algorithms of a different type: firstly, the correspondence between the points of one image and those of another is identified, so for each correspondence a triangulation is performed which allows, on the basis of the known information (image points and position/orientation of the chambers) the three-dimensional positions of each correspondence to be reconstructed.

According to an embodiment, said first, second and/or third Lidar unit 21, 22, 23 and said one or more video cameras 24 are configured to send to the control unit the obstacle data 211 and the image data 241 to the control unit 3, respectively.

According to an embodiment, the inspection system 2 comprises an illuminator (one or more illuminators) 25. Said illuminator 25 is configured to illuminate a front zone of the vehicle 1 to allow said one or more video cameras 24 to detect the image data 241 even under poor natural light conditions.

The vehicle 1 comprises a power supply system 4. The power supply system 4 is configured for powering the control unit 3 and the other electronic components of the vehicle 1. The power supply system 4 comprises a battery pack 41. Said battery pack rests on the lower wall 112, at the level of the base of the supporting structure 10. The power supply system 4 is connected to the control unit 3 for powering it and for sending autonomous data 401, representing an energy autonomy of the power supply system 4.

According to an embodiment, the vehicle 1 comprises a communication module 5. The communication module 5 is configured to allow a remote connection with remote terminals. More specifically, the communication module 5 allows the exchange of signals with remote terminals.

According to an embodiment, the communication module 5 comprises one or more of the following features:
- an LTE 51 module for the interconnection of wideband network;
- a GSM-R module 52 for the interconnection with a service network in situations without an LTE connection.
- a Wi-Fi transceiver 53.

According to an embodiment, the vehicle 1 comprises a localisation sensor 6, configured for detecting position data 601, representing a geographical position of the vehicle 1, preferably in real time. According to an embodiment, the localisation sensor 6 is a GPS sensor.

The localisation sensor is configured to send the position data 601 to the control unit 3.

According to an embodiment, the vehicle 1 comprises an alarm system 7. The alarm system 7 comprises an acoustic indicator 71. The alarm system 7 comprises a luminous indicator 72, if necessary intermittent. According to an embodiment, the alarm system is configured for receiving control signals 301 from the control unit 3.

According to an embodiment, the vehicle comprises a local user interface 8, by means of which a user can enter or send signals to the control unit 3. According to an embodiment, the local user interface 8 comprises a main ON/OFF pushbutton 81. The control unit 3 is programmed to switch off the electricity supply of the vehicle 1 in response to the selection of the main ON/OFF button 81.

According to an embodiment, the control unit 3 comprises a first card 31 and a second card 32. The first card 31 is designed for controlling the drive, the localisation sensor 6, the communication module 5 and the alarm system 7. According to an embodiment, the second card 32 is designed for controlling the inspection system 2, in particular the first and the second Lidar unit 21, 22. According to other embodiments, the control unit 3 comprises a third card 33. Moreover, according to an embodiment, the control unit 3 comprises a dedicated memory for each of said second and third cards 32, 33.

According to this embodiment, the second card 32 is designed for controlling and managing the first Lidar unit 21 whilst the third card 33 is designed for controlling and managing the second Lidar unit 22. The second and the third card 32, 33 are connected to the first card 31 by an Ethernet cable.

According to an embodiment, the vehicle comprises a drive unit, designed for moving the vehicle 1.

The drive unit comprises a plurality of wheels (rolling elements) 9. More specifically, according to the preferred embodiment, the vehicle comprises four wheels 9.

The drive unit comprises, for each wheel, one or more of the following components:
- an electric motor 91, connected to the power supply system 4 for receiving electricity;
- an electric current sensor 92 configured to detect intensity data 921, representing the value of electric current with which the electric motor is powered;
- a position sensor 93, for example an encoder, configured for detecting dynamic data 931, representing the position of the wheel relative to the supporting structure 10, that is, representing the distance travelled by the vehicle 1;
- a driver 94, configured to manage the electricity supply to the electric motor 91 on the basis of control signals 301 sent by the control unit 3.

According to an embodiment, each driver 94 is connected to the control unit 3, preferably to the first card 31 of the control unit 3. According to an embodiment, each driver 94 is connected to the power supply system 4 for receiving a supply of the electrical current.

According to an embodiment, the user interface 8 comprises a drive ON/OFF pushbutton. The control unit 3 is programmed to switch off the power supply to the driver 94 in response to the selection of the drive ON/OFF button.

According to an embodiment, the local user interface 8 is positioned on the cover 11, in a front or rear zone of the vehicle 1.

According to an embodiment, each electric motor 91 comprises a rotor 911 and a stator 912.

According to an embodiment, the wheel 9 comprises a supporting plate 95. The supporting plate 95 comprises a first plurality of connecting holes 951. The supporting plate 95 is connected to the coupling plate 104 of the supporting structure 104. More specifically, said first plurality of connecting holes 951 of the supporting plate 95 receive one or more connection bolts which pass through the coupling plate 104.

The connecting holes 951 of the supporting plate 95 are angularly spaced by ninety degrees from each other.

According to an embodiment, the supporting plate 95 comprises a second plurality of connecting holes 952. The second plurality of connecting holes 952 is configured to allow a connection between the supporting plate 95 and the stator 912 of the electric motor 91.

More specifically, the stator 912 comprises a connection ring 9121, including a plurality of pins, rising from the connecting ring 9121 along a direction parallel to the axis of rotation R of the wheel 9 and which can be screwed to fasten to the connecting ring 9121.

Said plurality of pins of the connecting ring 9121 inserts into the second plurality of connecting holes 952 of the supporting plate 95.

The wheel 9 comprises a drive shaft 96, configured to rotate about an axis of rotation R of the wheel 9.

The wheel 9 comprises a disc-shaped body 97. The disc-shaped body comprises an outer crown 971. The outer crown has an extension along the axis of rotation R. The diameter of the outer crown 971 along the axis of rotation R is variable. The disc-shaped body 97 comprises a plurality of spokes 972. The disc-shaped body 97 comprises a connecting hub 973.

The plurality of spokes 972 is connected to an inner surface SI of the outer crown 971. The plurality of spokes 972 is connected to an outer surface of the connecting hub 973. The thickness of the plurality of spokes 972 along the axis of rotation R is less than the thickness along the axis of rotation R of the outer crown 971.

The rotor 911 of the electric motor 91 is concentric and coaxial with the stator 912. Moreover, the rotor 911 has a smaller diameter than the stator 912. The stator 912 surrounds the rotor 911.

According to an embodiment, the drive shaft 96 is rotated with the rotor 911 of the electric motor 91. In particular, according to an embodiment, the drive shaft 96 is rotationally constrained to the rotor 911 of the electric motor 91 by a first key CH1.

According to an embodiment, the drive shaft 96 is constrained to the rotation with the disc-shaped body 97. In particular, according to an embodiment, the drive shaft 96 is constrained to the rotation with the disc-shaped body 97 by a second key CH2.

According to an embodiment, the drive shaft 96 is inserted inside a hub of the supporting plate 95. More specifically, the drive shaft 96 is supported by the supporting plate 95. The drive shaft 96 rests on the hub of the supporting plate 95 by means of one or more rolling bearings CS.

According to an embodiment, the position sensor 93 comprises a fixed part 932, which is connected to the supporting plate 95, and a movable part 933, which is constrained and therefore rotatable with the disc-shaped body 97.

According to an embodiment, the outer crown 971 comprises a side wall 971'. The side wall 971' comprises an inner surface SI, connected to the plurality of spokes 972. The side wall 971' comprises an outer surface SE. The outer surface CT is shaped to form a first portion P1, substantially parallel to the axis of rotation R, and a second portion P2, inclined relative to the axis of rotation R and, preferably, converging with the axis of rotation in a direction coming out of the vehicle 1.

The second portion P2 has a curved profile, in particular with a double curve, having opposite curvature (for example S-shaped).

The first and second portions P1, P2 are joined to each other by means of a step G. The second portion P2 is positioned, radially, further from the axis of rotation R relative to the first portion P1.

According to an embodiment, the wheel 9 comprises a wear element 98. The wear element 98 is superposed on the first portion P1 of the outer surface of the side wall 971'.

The wear element 98 extends along the axis of rotation R from a first end 98A, in contact with the step G and connected to the second portion P2 of the outer surface of the side wall 971', and a second end 98B, opposite the first end 98A.

The wear element 98 has a radial thickness variable along the axis of rotation R, which, preferably, but not necessarily, decreases in a direction coming out of the vehicle 1. According to other embodiments, the wear element 98 has a constant radial thickness along the axis of rotation R.

The maximum radial thickness is defined, according to an embodiment, by the radial height of the step G, in such a way that the wear element defines a continuous surface with the second portion P2 of the outer surface SE of the side wall 971'.

According to an embodiment, the surface of the wear element 98 facing in the opposite direction to the axis of rotation R defines a first contact surface SC1. Said first contact surface SC1 is designed to roll on a rolling portion of the rails, which is substantially parallel to the horizontal plane.

According to an embodiment, the second portion P2 defines a second contact surface SC2. The second contact surface SC2 is designed to make contact with a contact surface of the track which is oriented substantially vertically (perpendicular to the rolling portion of the track).

According to an embodiment, the second portion P2 defines a third contact surface SC3. The third contact surface SC3 faces in a direction substantially opposite the second contact surface SC2. The third contact surface SC3 is configured to make contact with a railway counter-track, in the context of railway points sets, wherein the vehicle must continue on a predetermined branch. This avoids the rolling element opposite the rolling element which comes into contact with the counter-track from colliding (jamming) with a frog of the points set. The term "counter-track" and "frog", in the context of a railway points set, is a known and common term for an expert in the trade.

According to an embodiment, the side wall 971' comprises a ridge, the two sides of which are defined by the second contact surface SC2 and by the third contact surface SC3. According to an embodiment, said ridge is full, and its inside diameter corresponds, basically, to the internal diameter of the first portion, to form a single wall.

On the other hand, according to an embodiment, which further contributes to reducing the weight of the vehicle 1, the ridge is substantially hollow and an insert I, made preferably of plastic material, is housed inside it.

According to an embodiment, the wear element is made of plastic material, preferably polyurethane. However, materials are used with a high coefficient of resistance to wear and which have a reduced weight.

According to an embodiment, the disc-shaped body 97 (in general the components of the wheel) is made of aluminium.

According to an embodiment, the control unit 3 is configured to receive one or more of the following input data:
- image data 241;
- presence data 211;
- autonomy data 401;
- position data 601;
- intensity data 921;
- dynamic data 931.

According to an embodiment, the control unit 3 is programmed for generating control signals 301, on the basis of one or more groups of data in the context of the input data.

According to an embodiment, the control unit 3 comprises a memory (reading and writing). The memory contains reference values for one or more control parameters. Preferably, the control unit 3 is programmed for controlling the actuation unit on the basis of said reference values.

Said one or more control parameters represent one or more of the following parameters:
- cruising speed;
- maximum speed;
- distance in kilometres;
- maximum distance in kilometres;
- geographical starting position;
- geographical arrival position;
- interruption of the journey, or not, if there is an object which prevents the vehicle from moving forward;
- number and type of sensors active between said one or more sensors;
- stretch data, representing the railway route to be travelled along and inspected;
- detection distance of said one or more sensors.

According to an embodiment, this invention provides a system 1000 for inspecting a stretch of railway line. The system 1000 comprises the vehicle 1 according to one or more of the features of the invention.

Moreover, the system 1000 comprises a processing unit 1001. The processing unit 1001 is located in a stationary position. Preferably, the position of the processing unit 1001 is remote relative to the vehicle.

According to an embodiment, the processing unit is equipped with a user interface (remote) 1002, to allow a user to enter control data 1003.

According to an embodiment, the processing unit 1001 is programmed to receive the inspection data 201 from the vehicle 1. According to an embodiment, the processing unit 1001 is programmed to send the control data to the vehicle. The control data 1003, according to an embodiment, represents the values of the control parameters saved in the memory of the control unit 3. This makes it possible to suitably program the vehicle 1 remotely before the vehicle starts the actual inspection of the stretch of railway line. The control data 1003 is sent by means of the communication module, for example by means of Wi-Fi, LTE or GSMR connection.

According to an embodiment, the communication module sends, preferably in real time, information on the vehicle during its travel. Said information is, for example, the status of the sensors, the speed of travel of the vehicle, the geographical position of the vehicle, the distance travelled by the vehicle and/or the video streaming on the stretch of line travelled along.

According to an embodiment of processing, the remote processing unit 1001 may be a personal computer, a tablet and/or a smartphone.

According to an embodiment, the system comprises a plurality of processing units (remote) 1001, each connected with the vehicle 1 and able to send the control data 1003 to the vehicle 1. This allows a control redundancy on the vehicle 1.

However, this solution poses the problem of controlling the accesses and the authorisations. For this reason, in order to prevent overlapping of the control, the control unit 3 is configured for receiving the control data 1003 from a single processing unit 1001 at a time. Moreover, if a processing unit 1001 wishes to send control data 1003 whilst another processing unit 1001 has the control, the control unit 3 is programmed to send an authorisation message to the processing unit 1001 which has the control, to allow the current controller to pass the control of the vehicle to another processing unit 1001.

The remote user interface 1002, according to an embodiment, comprises a replication (redundancy) of the main ON/OFF pushbutton 81 and the drive ON/OFF pushbutton.

According to an embodiment, the user interface allows the display of the vehicle data in real time.

According to an embodiment, the control unit 3 is programmed to control the electricity supply to the electric motors 91, on the basis of the position data 601, the dynamic data 931 and the control data (that is, the values of the control parameters) and/or on the basis of the stretch data.

More specifically, the control unit 3 is programmed to determine a speed of forward movement of the vehicle 1 on the basis of the position data 601 and/or dynamic data 931. The control unit 3 is programmed to compare the value of the speed of forward movement with the maximum cruising speed value between the reference values. The control unit 3 is programmed to vary the electrical power supply parameters of the motors for reducing a difference between the speed of forward movement and the maximum cruising speed.

The control unit 3 is programmed to detect a position of the vehicle 1 along the stretch of railway line on the basis of the position data 601 or dynamic data 931. According to an embodiment, the control unit 3 is programmed for evaluating the presence of slowing down conditions along the stretch on the basis of the stretch data. In other words, the control unit 3 is programmed to recognise in advance the approach towards bends and/or tunnels.

The control unit 3 is programmed to vary the electrical power supply parameters of the motors to slow down the speed of forward movement of the vehicle at bends and/or tunnels.

According to an embodiment, the control unit 3 is programmed to identify one or more slowing down conditions. The control unit 3 is programmed to slow down the speed for forward movement if at least one of said one or more slowing down conditions occurs.

According to an embodiment, the control unit 3 is programmed to slow down the speed of forward movement of the vehicle 1 in a manner proportional to a distance of the vehicle 1 from a obstacle in front, detected on the basis of the inspection data 201. According to an embodiment, said slowing down of the vehicle 1 ends with the stopping, to prevent the collision with the lateral obstacle.

The vehicle 1 comprises an accelerometer (IMU sensor), programmed to detect vibration data, representing a vibration of the vehicle 1.

Said one or more slowing down conditions include one or more of the following conditions:
- identifying, on the basis of inspection data 201, the presence of lateral masonry works (for example, tunnels) continuously and close to the limits of PMO;
- identifying, on the basis of inspection data 201, the presence of front masonry works at distances close to the space for stopping the device
- (for example, bends and obstacles in the front direction);
- identifying, based on dynamic data 931, the presence of high lateral accelerations and/or high angular speeds;
- identifying, based on vibration data, the presence of high vibrations;
- identifying, on the basis of dynamic data 931, the presence of an significant difference between an average speed of rotation of the wheels of the vehicle 1;
- distance from the geographical destination point below a limit value, on the basis of position data 601 and/or dynamic data 931;
- loss of connection of the communication module;
- loss of the connection of the communication module for a longer time than a limit time interval;
- moving away from the geographical destination position by a value greater than a limit value.

According to an embodiment, the control unit 3 is programmed, in the absence of slowing down conditions, to control the drive unit of the vehicle to perform the inspection according to a speed of forward movement profile including a first acceleration step up to the maximum cruising speed, a second step of advancing at a constant speed and a third slowing down step until stopping at the geographical arrival position.

According to an embodiment, the control unit 3 is programmed to identify one or more stopping conditions. The control unit 3 is programmed to stop the vehicle 1 if at least one of said one or more stop conditions occurs.

Said one or more stop conditions include one or more of the following conditions:
- real-time position of the vehicle 1, determined on the basis of position data 601, far from the geographical arrival position by a value less than an permissible threshold; this condition allows the vehicle 1 to be stopped when it is close to the geographical destination position;
- ratio between the real time distance of the vehicle 1 from the geographical destination position and the minimum distance (during travel along the stretch) of the vehicle 1 from the geographical destination position less than a predetermined value; this condition makes it possible to stop the vehicle 1 if the latter does not move below the permissible threshold and then continue to move away;
- autonomy of the vehicle 1, determined on the basis of autonomy data 401, less than a value of autonomy necessary to reach the geographical destination position; this condition prevents the vehicle from remaining without power supply since the previous condition might not occur if the vehicle 1 rotates about the geographical destination position, without varying its distance from the latter;
- distance travelled by the vehicle 1, determined on the basis of position data 601 and/or on the basis of dynamic data 931, greater than the maximum distance value which may be travelled;
- a voltage for powering the motors which is anomalous and less than a nominal value; for example, the cases can be excessive electricity consumption (e.g. lighting), battery at the start not completely charged, routes with high friction; for this reason, it is useful for the control unit to stop the vehicle before it switches off due to insufficient power supply;
- generic alarms relating to malfunctions of the drive unit, of the communication module 5, of the power supply system 4, of the inspection system 2;
- identifying, based on inspection data 201, obstacles to the front and sides; more specifically, the control unit 3 is programmed to slow down the vehicle 1 in the presence of obstacles in front and/or materials for ending with the stopping of the vehicle 1 before reaching the obstacle. The control unit 3 is programmed to keep the vehicle 1 stationary until the obstacle is removed. If the obstacle is not removed, for example in the presence of a permanent obstruction, the control unit 3 is programmed to require manual recovery of the vehicle 1.
- travel time, that is to say, the time in which the vehicle 1 is moving, greater than a limit time interval.
- According to an embodiment, the remote user interface 1002 comprises one or more of the following features:
   - a general status panel, designed for mission monitoring and for controlling the movement of the vehicle 1, which provides one or more of the following items of information: real-time position of the vehicle 1; inspection speed profile; real-time forward movement speed; distance travelled updated in real time; number of obstacles found and voltage of power supply system 4; percentage of completion of the inspection and distance from geographical destination position and/or reaching at least one current stopping condition; time and date of last data receiving; current network configurations;
   - a panel for configuring the mission profile, dedicated to selecting the cruising speed, the geographical destination position and the maximum distance which can be travelled;
   - a dedicated LOG panel to monitor all the signals inside the system 1001;
   - a manual interaction panel for checking the inspection of the vehicle 1, in which the following operations can be performed: speed control; position control (at regular intervals); *setpoint* change (speed and position); stop command; control for storing a photo and/or a measurement; commands (where possible) for rotating said one or more video cameras 24;
   - a panel for configuring and diagnostics;
   - a panel for loading and downloading the data, preferably inspection data 201.

## Claims

1. A wheel (9) of a vehicle (1) for inspecting a railway line, comprising:
- a disc-shaped body (97), extending about an axis of rotation (R) and including:
a first face;
a second face, opposite to the first face;
a side wall (971') connected to the first and second faces and configured to come into contact with a track of the rail of the railway line;
- a wear element (98) made of plastic material,
wherein the side wall (971') includes
a first portion (P1), the wear element (98) being superposed on the first portion (P1) and defining a first contact surface (SC1) designed to make contact with a rolling portion of the track, and
a second portion (P2), defining a second contact surface (SC2), inclined relative to the axis of rotation (R) to make contact with a contact portion of the track,
**characterized in that** the wheel (9) comprises an electric motor (91), including a rotor (911), constrained to the disc-shaped body (97) to place it in rotation, and a stator (912), which can be associated with a frame (10) of the vehicle (1).

2. The wheel (9) according to claim 1, wherein the second contact surface (SC2) is at a distance from the axis of rotation (R) which is greater than the first contact surface (SC1).

3. The wheel (9) according to claim 2, wherein the side wall (971') comprises a circumferential step (G), which separates the first portion (P1) from the second portion (P2) of the side wall (971') and wherein the height of the step (G), along a radial direction perpendicular to the axis of rotation (R), defines a maximum radial thickness of the wear element (98).

4. The wheel (9) according to any of the preceding claims, comprising a supporting plate (95), which can be associated with the frame (10) of the vehicle (1) and connected to the stator (912).

5. The wheel (9) according to claim 4, comprising a shaft (96), connected to the disc-shaped body (97) and to the rotor (911), for transferring the rotation of the rotor (911) to the disc-shaped body (97), wherein the shaft (96) is supported by the supporting plate (95) by one or more rolling bearings (CS).

6. The wheel (9) according to claim 5, comprising a position transducer (93), configured to determine an angular position of the wheel (9) relative to the frame (10) of the vehicle (1) and interposed, along the axis of rotation (R) of the wheel (9), between the first face of the disc-shaped body (97) and the supporting plate (95).

7. The wheel (9) according to any one of the preceding claims, comprising a position transducer (93), configured to determine an angular position of the wheel (9) relative to a frame (10) of the vehicle (1) and/or an angular speed of the wheel (9) relative to the frame (10).

8. The wheel (9) according to any one of the preceding claims, wherein the disc-shaped body (97) comprises:
- a connecting hub (973);
- a plurality of spokes(972);
- an outer crown (971), defining the side wall (971').

9. The wheel (9) according to any one of the preceding claims, wherein the disc-shaped body (97) is made of steel or aluminium, and wherein the wear element (98) is made of rubber or polyurethane.

10. The wheel (9) according to any one of the preceding claims, wherein the outer diameter of the wheel (9) is included in a range of between 200 mm and 600 mm.

11. A method for moving a vehicle along a track for inspecting a railway line, comprising the following steps:
- preparing a plurality of disc-shaped bodies (97), each extending about an axis of rotation (R), and including a first face, a second face, opposite the first face, and a side wall (971'), connected to the first and the second face and configured to make contact with the track;
- connecting the disc-shaped bodies (97) to a frame (10) of the vehicle (1);
- rotating the disc-shaped bodies (97) about their own axes,
wherein each disc-shaped body (97)
rolls it on a rolling portion of the track, resting on a first contact surface (SC1), formed by a wear element (98) superposed on a first portion (P1) of the side wall (971') of the respective disc-shaped body (97),
comes into contact with a track contact portion in a second contact surface (SC2), defined by a second portion (P2) of the side wall (971') of the respective disc-shaped body (97),
preparing an electric motor (91), including a rotor (911), constrained to the disc-shaped body (97) to place it in rotation, and a stator (912), which can be associated with a frame (10) of the vehicle (1).

12. The method according to claim 11, comprising a step of preparing a plurality of supporting plates (95) and a corresponding plurality of electric motors (91), each electric motor (91) having a rotor (911) and a stator (912),
wherein each supporting plate (95) is fixed to the frame (10) of the vehicle (1) and each electric motor (91) is interposed between a corresponding supporting plate (95) and a respective disc-shaped body (97), with the stator (912) fixed to the supporting plate (95) and the rotor (911) fixed to the disc-shaped body (97).

## Patentansprüche

1. Rad (9) eines Fahrzeugs (1) zur Prüfung einer Eisenbahnstrecke, umfassend:
- einen scheibenförmigen Körper (97), der sich um eine Rotationsachse (R) erstreckt und Folgendes einschließt:
eine erste Seitenfläche;
eine zweite Seitenfläche, die gegenständig zur ersten Seitenfläche angeordnet ist;
eine Seitenwand (971'), die mit der ersten und der zweiten Seitenfläche verbunden und ausgelegt ist, um mit einer Schiene des Gleises der Eisenbahnstrecke in Kontakt zu kommen;
- ein Verschleißelement (98) aus Kunststoffmaterial,
wobei die Seitenwand (971') Folgendes einschließt einen ersten Abschnitt (P1), wobei das Verschleißelement (98) auf dem ersten Abschnitt (P1) gelagert ist und eine erste Kontaktoberfläche (SC1) definiert, die ausgestaltet ist, um den Kontakt mit einem Rollabschnitt der Schiene herzustellen, und
einen zweiten Abschnitt (P2), definierend eine zweite Kontaktoberfläche (SC2), die relativ zur Rotationsachse (R) geneigt ist, um den Kontakt mit einem Kontaktabschnitt der Schiene herzustellen,
**dadurch gekennzeichnet, dass** das Rad (9) einen Elektromotor (91), einschließend einen Rotor (911), der am scheibenförmigen Körper (97) befestigt ist, um diesen in Drehung zu versetzen, und einen Stator (912) umfasst, der mit einem Rahmen (10) des Fahrzeugs (1) assoziiert werden kann.

2. Rad (9) nach Anspruch 1, wobei die zweite Kontaktoberfläche (SC2) in einem Abstand von der Rotationsachse (R) ist, der größer ist als der der ersten Kontaktoberfläche (SC1).

3. Rad (9) nach Anspruch 2, wobei die Seitenwand (971') eine Umfangsstufe (G) umfasst, die den ersten Abschnitt (P1) vom zweiten Abschnitt (P2) der Seitenwand (971') trennt, und wobei die Höhe der Stufe (G) entlang einer radialen Richtung senkrecht zur Rotationsachse (R) eine maximale radiale Dicke des Verschleißelements (98) definiert.

4. Rad (9) nach einem der vorhergehenden Ansprüche, umfassend eine Stützplatte (95), die mit dem Rahmen (10) des Fahrzeugs (1) assoziiert und mit dem Stator (912) verbunden werden kann.

5. Rad (9) nach Anspruch 4, umfassend eine Welle (96), die mit dem scheibenförmigen Körper (97) und dem Rotor (911) verbunden ist, um die Rotation des Rotors (911) auf den scheibenförmigen Körper (97) zu übertragen, wobei die Welle (96) durch die Stützplatte (95) durch ein oder mehrere Wälzlager (CS) gestützt wird.

6. Rad (9) nach Anspruch 5, umfassend einen Positionswandler (93), der ausgelegt ist, um eine Winkelposition des Rads (9) relativ zum Rahmen (10) des Fahrzeugs (1) zu bestimmen, und der entlang der Rotationsachse (R) des Rads (9) zwischen der ersten Seitenfläche des scheibenförmigen Körpers (97) und der Stützplatte (95) eingesetzt ist.

7. Rad (9) nach einem der vorhergehenden Ansprüche, umfassend einen Positionswandler (93), der ausgelegt ist, um eine Winkelposition des Rads (9) relativ zu einem Rahmen (10) des Fahrzeugs (1) und/oder eine Winkelgeschwindigkeit des Rads (9) relativ zum Rahmen (10) zu bestimmen.

8. Rad (9) nach einem der vorhergehenden Ansprüche, wobei der scheibenförmige Körper (97) Folgendes umfasst:
- eine Verbindungsnabe (973);
- eine Vielzahl von Speichen (972);
- einen äußeren Kranz (971), der die Seitenwand (971') definiert.

9. Rad (9) nach einem der vorhergehenden Ansprüche, wobei der scheibenförmige Körper (97) aus Stahl oder Aluminium besteht und wobei das Verschleißelement (98) aus Kautschuk oder Polyurethan besteht.

10. Rad (9) nach einem der vorhergehenden Ansprüche, wobei der Außendurchmesser des Rads (9) in einem Bereich zwischen 200 mm und 600 mm eingeschlossen ist.

11. Verfahren zum Bewegen eines Fahrzeugs entlang einer Schiene zur Prüfung einer Eisenbahnstrecke, umfassend die folgenden Schritte:
Vorbereiten einer Vielzahl von scheibenförmigen Körpern (97), von denen ein jeder sich um eine Rotationsachse (R) erstreckt und eine erste Seitenfläche, eine zweite Seitenfläche, die gegenständig zur ersten Seitenfläche angeordnet ist, und eine Seitenwand (971'), die mit der ersten und der zweiten Seitenfläche verbunden und ausgelegt ist, um den Kontakt zur Schiene herzustellen, einschließt;
- Verbinden der scheibenförmigen Körper (97) mit einem Rahmen (10) des Fahrzeugs (1);
- Drehen der scheibenförmigen Körper (97) um ihre eigenen Achsen,
wobei ein jeder scheibenförmiger Körper (97) auf einem Rollabschnitt der Schiene rollt und dabei auf einer ersten Kontaktoberfläche (SC1) ruht, die durch ein Verschleißelement (98) gebildet ist, das auf einem ersten Abschnitt (P1) der Seitenwand (971') des jeweiligen scheibenförmigen Körpers (97) gelagert ist,
und mit einem Schienenkontaktabschnitt in einer zweiten Kontaktoberfläche (SC2), definiert durch einen zweiten Abschnitt (P2) der Seitenwand (971') des jeweiligen scheibenförmigen Körpers (97) in Kontakt kommt,
Vorbereiten eines Elektromotors (91), einschließend einen Rotor (911), der am scheibenförmigen Körper (97) befestigt ist, um diesen in Drehung zu versetzen, und
einen Stator (912), der mit einem Rahmen (10) des Fahrzeugs (1) assoziiert werden kann.

12. Verfahren nach Anspruch 11, umfassend einen Schritt zum Vorbereiten einer Vielzahl von Stützplatten (95) und einer entsprechenden Vielzahl von Elektromotoren (91), wobei ein jeder Elektromotor (91) einen Rotor (911) und einen Stator (912) aufweist,
wobei eine jede Stützplatte (95) am Rahmen (10) des Fahrzeugs (1) fixiert ist und ein jeder Elektromotor (91) zwischen einer entsprechenden Stützplatte (95) und einem jeweiligen scheibenförmigen Körper (97) eingesetzt ist, wobei der Stator (912) an der Stützplatte (95) fixiert ist und der Rotor (911) am scheibenförmigen Körper (97) fixiert ist.

## Revendications

1. Roue (9) d'un véhicule (1) d'inspection d'une ligne de chemin de fer, comprenant :
- un corps en forme de disque (97), s'étendant autour d'un axe de rotation (R) et incluant :
une première face ;
une deuxième face, opposée à la première face ;
une paroi latérale (971') reliée aux première et seconde faces et configurée pour entrer en contact avec une voie du rail de la ligne de chemin de fer ;
- un élément d'usure (98) réalisé en matière plastique,
dans lequel la paroi latérale (971') inclut
une première portion (P1), l'élément d'usure (98) étant superposé à la première portion (P1) et définissant une première surface de contact (SC1) conçue pour entrer en contact avec une portion de roulement de la voie, et
une seconde portion (P2), définissant une seconde surface de contact (SC2), inclinée par rapport à l'axe de rotation (R) pour entrer en contact avec une portion de contact de la voie,
**caractérisé en ce que** la roue (9) comprend un moteur électrique (91), incluant un rotor (911), contraint au corps en forme de disque (97) pour le mettre en rotation, et un stator (912), qui peut être associé à un châssis (10) du véhicule (1).

2. Roue (9) selon la revendication 1, dans laquelle la seconde surface de contact (SC2) est à une distance de l'axe de rotation (R) qui est supérieure à la première surface de contact (SC1).

3. Roue (9) selon la revendication 2, dans laquelle la paroi latérale (971') comprend une marche circonférentielle (G), qui sépare la première portion (P1) de la seconde portion (P2) de la paroi latérale (971') et dans laquelle la hauteur de la marche (G), le long d'une direction radiale perpendiculaire à l'axe de rotation (R), définit une épaisseur radiale maximale de l'élément d'usure (98).

4. Roue (9) selon l'une quelconque des revendications précédentes, comprenant une plaque de support (95), qui peut être associée au châssis (10) du véhicule (1) et reliée au stator (912).

5. Roue (9) selon la revendication 4, comprenant un arbre (96), relié au corps en forme de disque (97) et au rotor (911), pour transférer la rotation du rotor (911) au corps en forme de disque (97), dans laquelle l'arbre (96) est supporté par la plaque de support (95) par un ou plusieurs paliers à roulement (CS).

6. Roue (9) selon la revendication 5, comprenant un transducteur de position (93), configuré pour déterminer une position angulaire de la roue (9) par rapport au châssis (10) du véhicule (1) et interposé, le long de l'axe de rotation (R) de la roue (9), entre la première face du corps en forme de disque (97) et la plaque de support (95).

7. Roue (9) selon l'une quelconque des revendications précédentes, comprenant un transducteur de position (93), configuré pour déterminer une position angulaire de la roue (9) par rapport à un châssis (10) du véhicule (1) et/ou une vitesse angulaire de la roue (9) par rapport au châssis (10).

8. Roue (9) selon l'une quelconque des revendications précédentes, dans laquelle le corps en forme de disque (97) comprend :
- un moyeu de connexion (973) ;
- une pluralité de rayons (972) ;
- une couronne extérieure (971), définissant la paroi latérale (971').

9. Roue (9) selon l'une quelconque des revendications précédentes, dans laquelle le corps en forme de disque (97) est en acier ou en aluminium, et dans laquelle l'élément d'usure (98) est en caoutchouc ou en polyuréthane.

10. Roue (9) selon l'une quelconque des revendications précédentes, dans laquelle le diamètre extérieur de la roue (9) est compris dans une plage comprise entre 200 mm et 600 mm.

11. Procédé pour déplacer un véhicule le long d'une voie d'inspection d'une ligne de chemin de fer, comprenant les étapes suivantes :
préparer une pluralité de corps en forme de disque (97), chacun s'étendant autour d'un axe de rotation (R), et incluant une première face, une seconde face, opposée à la première face, et une paroi latérale (971'), reliée à la première et à la seconde face et configurée pour entrer en contact avec la voie ;
- relier les corps en forme de disque (97) à un châssis (10) du véhicule (1) ;
- faire tourner les corps en forme de disque (97) autour de leurs propres axes,
dans lequel chaque corps en forme de disque (97)
le fait rouler sur une portion de roulement de la voie, reposant sur une première surface de contact (SC1), formée par un élément d'usure (98) superposé à une première portion (P1) de la paroi latérale (971') du corps en forme de disque respectif (97),
entre en contact avec une portion de contact de voie dans une seconde surface de contact (SC2), définie par une seconde portion (P2) de la paroi latérale (971') du corps en forme de disque respectif (97),
préparer un moteur électrique (91), incluant un rotor (911), contraint au corps en forme de disque (97) pour le mettre en rotation, et un stator (912), qui peut être associé à un châssis (10) du véhicule (1).

12. Procédé selon la revendication 11, comprenant une étape consistant à préparer une pluralité de plaques de support (95) et une pluralité correspondante de moteurs électriques (91), chaque moteur électrique (91) ayant un rotor (911) et un stator (912),
dans lequel chaque plaque de support (95) est fixée au châssis (10) du véhicule (1) et chaque moteur électrique (91) est interposé entre une plaque de support correspondante (95) et un corps en forme de disque respectif (97), le stator (912) étant fixé à la plaque de support (95) et le rotor (911) étant fixé au corps en forme de disque (97).
